# EUROPÄISCHE PATENTANMELDUNG

(11) **EP 1 193 133 A2**
(43) Veröffentlichungstag der Anmeldung: **03.04.2002**
(21) Anmeldenummer: 01123620.5
(22) Anmeldetag: 02.10.2001
(51) Int. Cl.: B60R 16/02

(54) **Sicherheitseinrichtung für Kraftfahrzeuge**

(30) Priorität: 02.10.2000 AT 16582000
(71) Anmelder: Tröls, Leopold, 4261 Rainbach (AT)
(72) Erfinder: Tröls, Leopold, 4261 Rainbach (AT)
(74) Vertreter: Landgraf, Elvira, Dipl.-Ing.

(57) **Zusammenfassung**

Die Erfindung betrifft eine Sicherheitseinrichtung für Kraftfahrzeuge bestehend aus einem oder mehreren in den kritischen Fahrzeugteilen angebrachten Drucksensor(en) und/oder Neigungsschater(n) (1), der/die bei Überschreiten einer definierten Krafteinwirkung bzw. Neigung des Kraftfahrzeuges über einen Prüf- bzw. Notschalter (2) und ein Relais (3) ein oder mehrere LED - Signalleuchte - in Betrieb setzt (setzen), und/oder über einen Lautsprecher einen Signalton abgeben, wobei die Stromversorgung über einen vom Kraftfahrzeug unabhängigen Stromkreis erfolgt, der seine Energie über einen entsprechen dimensionierten Kondensator oder Akku (6) erhält, der bei Betrieb des Kraftfahrzeugs aufgeladen wird und jeder Stromkreis durch eine Hauptsicherung und eine Nebensicherung abgesichert ist.

## Beschreibung

Die Erfindung betrifft eine Sicherheitsvorrichtung für Kraftfahrzeuge aller Art, sowie eine kombinierte Sicherheits- und Entwarnvorrichtung für Kraftfahrzeuge aller Art.

Unter Kraftfahrzeugen aller Art sind insbesondere Personenkraftwagen, Lastkraftwagen, Motorräder, Mopeds und dergleichen zu verstehen.

Bei Unfällen, Pannen und dergleichen ist insbesondere die Absicherung bzw. Sichtbarmachung des verunglückten Fahrzeugs entscheidend für die Sicherheit der nachfolgenden Verkehrsteilnehmer aber auch, insbesondere wenn das Ereignis an einer unübersichtlichen Stelle stattfindet oder das verunglückte Fahrzeug abseits eines Verkehrsweges zum Stillstand kommt für die Sicherheit der Insassen. Insbesondere wenn die Insassen selbst nicht mehr in der Lage sind, Hilfe zu holen oder die professionellen Hilfsdienste zu verständigen, kann die Möglichkeit das verunglückte Fahrzeug auch abseits der Verkehrswege zu erkennen entscheidend für das Überleben der Insassen sein.

Es ist bisher keine Sicherheitseinrichtung für Kraftfahrzeuge mit einer vom Kraftfahrzeugstromkreis unabhängigen Energieversorgung bekannt, die nach selbsttätigem Erkennen eines Unglücksfalls direkt optische und/oder akustische Warnsignale, die von den übrigen Beleuchtungseinrichtungen des Kraftfahrzeugs unabhängig sind und so ausgeführt sind, dass sie auch bei stärken mechanischen Einwirkungen nicht zerstört werden, auslöst um so einerseits das Fahrzeug abzusichern andererseits auf dieses aufmerksam zu machen, falls Hilfe nötig ist.

Aufgabe der vorliegenden Erfindung war es daher eine Sicherheitseinrichtung für Kraftfahrzeuge aller Art bereitzustellen, die diese Anforderungen erfüllt.

Gegenstand der Erfindung ist daher eine Sicherheitseinrichtung für Kraftfahrzeuge bestehend aus einem oder mehreren in den kritischen Fahrzeugteilen angebrachten Drucksensor(en) und/oder Neigungsschalter(n) (1), der/die bei Überschreiten einer definierten Krafteinwirkung bzw. Neigung des Kraftfahrzeuges über einen Prüf- bzw. Notschalter (2) und ein Relais (3) eine oder mehrere LED - Signalleuchte(n) (4) in Betrieb setzt (setzen), und/oder über einen Lautsprecher (4a) einen Signalton abgibt, wobei die Stromversorgung über einen vom Kraftfahrzeug unabhängigen Stromkreis erfolgt, der seine Energie über einen entsprechend dimensionierten Kondensator oder Akku 6 erhält, der bei Betrieb des Kraftfahrzeugs aufgeladen wird und jeder Stromkreis durch eine Haupt- und eine Nebensicherung abgesichert ist.

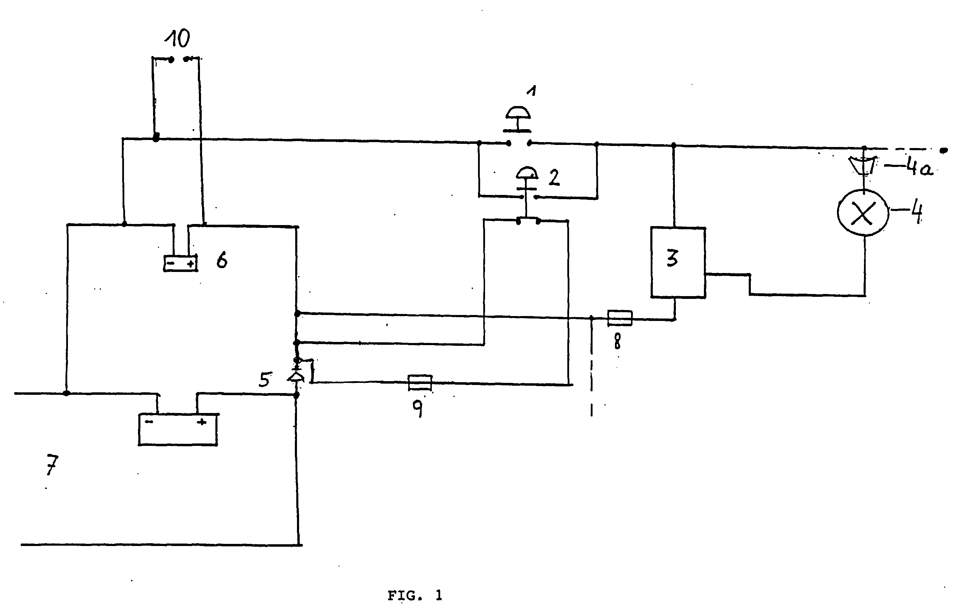

Ein Beispiel für eine entsprechende Schaltung ist in Fig. 1 dargestellt. Darin bedeuten 1 den Drucksensor, 2 den Prüf- bzw. Notschalter, 3 das Relais, 4 die Signalleuchte, 4a einen Lautsprecher, 5 eine Diode, 6 einen Kondensator oder Akku, 7 die Energieversorgung des Kraftfahrzeugs, 8 eine Sicherung und 9 eine Hauptsicherung, 10 einen Anschluss für weitere Noteinrichtungen.

Die Drucksensoren bzw. die Neigungsschalter werden an den kritischen, im allgemeinen zuerst von einem Unfall betroffenen Fahrzeugteilen, beispielsweise in den Stoßstangen, und/oder den Fahrer- und Beifahrertüren, den Fondtüren und/oder in der Dachkonstruktion und/oder in den Kotflügeln angebracht.

Bei einspurigen Fahrzeugen werden die Drucksensoren und/oder Neigungsschalter insbesondere in den Kotflügeln, in der Lenkvorrichtung und/oder im Bereich des Kraftstofftanks oder des Motors angebracht. Besonders vorteilhaft ist die Verwendung von Drucksensoren in Kombination mit einem Neigungsschalter, da auch im Fall geringer Krafteinwirkung auf den Drucksensor durch den Neigungsschalter eine außergewöhnliche Lage des Fahrzeuges erkannt werden kann und entsprechende Maßnahmen ausgelöst werden.

Bei Überschreitung einer definierten Krafteinwirkung auf einen oder mehrere der Drucksensoren wird über einen Prüf- bzw. Notschalter über ein Relais eine oder mehrere LED-Signalleuchten in Betrieb gesetzt und/oder über einen Lautsprecher ein Signalton abgegeben. Ebenso werden im Falle der Verwendung eines Neigungsschalters bei Überschreiten einer definierten Neigung des Kraftfahrzeuges in gleicher Weise die Signalleuchten bzw. Lautsprecher in Betrieb gesetzt. Das System wird über einen Kondensator oder Akku, der entweder über die Lichtmaschine und/oder über externe Batterien gespeist bzw. geladen wird, mit Energie versorgt. Im allgemeinen ist eine Spannung von 12 V ausreichend. Gegebenenfalls können über den über den Stromkreis des Kraftfahrzeugs aufgeladenen Kondensator oder Akku 6 auch weitere Notfalleinrichtungen, beispielsweise Notfunk betrieben werden. Die Verwendung eines Kondensators hat den Vorteil, dass dieser im Gegensatz zum herkömmlichen Akku wartungs- und störungsfreier zu betreiben ist und eine längere Lebensdauer aufweist.

In Fall eines Fehlalarms bzw. wenn eine zusätzlich Absicherung oder Hilfe nicht nötig ist kann das System mittels des Prüfschalters wieder außer Betrieb gesetzt werden. Über den Prüfschalter erfolgt auch die Funktionskontrolle des Sicherheitssystems, ferner kann im Falle einer für die automatische Auslösung der optischen Warnsignale nicht ausreichenden mechanischen Einwirkung auf das Fahrzeug (beispielsweise Anhalten des Fahrzeugs wegen einer Erkrankung des Lenkers), das System über diesen Schalter händisch vom Lenker oder Beifahrer oder Helfer aktiviert werden. Dazu ist der Prüf- bzw. Notschalter vorteilhafterweise am oder in der Nähe des Armaturenbrettes eingebaut und entsprechend gekennzeichnet.

Das Relais ist vorzugsweise ein Blinkrelais, da durch blinkende Signalleuchten erhöhte Aufmerksamkeit erweckt wird.
Die Signalleuchten sind in LED - Ausführung vorgesehen, wodurch eine hohe Widerstandskraft der Signalleuchten gegen mechanische Beschädigungen gewährleistet ist und vorzugsweise in weiß gehalten. Es sind aber auch andere Ausführungen oder Farben möglich. Die Signalleuchten können in die üblichen Beleuchtungseinrichtungen des Kraftfahrzeugs integriert werden, aber auch an jeder geeigneten Stelle des Fahrzeugs angebracht werden.

In einer besonderen Ausführungsform können die LED-Leuchten so angeordnet sein, dass sie Buchstaben z.B. "Hilfe", oder "Vorsicht" oder "Unfall" u. dgl. ergeben. Zu diesem Zweck ist es vorteilhaft eine solche Anordnung beispielsweise im Bereich der Heckscheibe in ausreichender Größe vorzusehen.

Die Vorrichtung kann auch einen Anschluss für weiteren Noteinrichtungen beispielsweise Satelliteneinrichtungen und dergleichen aufweisen.
Es ist auch möglich ein über einen vorzugsweise verdeckt angebrachten Schalter aktivierbares Notrufsystem anzuschließen, wobei im Fall eines Überfalls ein Mikrofon und gleichzeitig eine LED Signalleuchte aktiviert wird, das alle Vorgänge im Kraftfahrzeug an eine Notrufleitzentrale überträgt, deren Telefonnummer automatisch angewählt wird. Der Schalter oder Taster kann verdeckt entweder in der Nähe des oder am Lenkrades oder in der Nähe der Fußpedale angebracht sein. In diesem Falle ist es vorteilhaft die entsprechende zu aktivierende LED-Signalleuchte im Beleuchtungssystem des Kraftfahrzeugs zu integrieren.

Durch die Absicherung jedes Stromkreises durch eine Haupt- und eine Nebensicherung ist gewährleistet, dass auch bei Ausfall eines Stromkreises, die weiteren Stromkreise sicher funktionieren.

Bei einspurigen Fahrzeugen kann auch ein Drucksensor Und/oder Neigungsschalter und eine Signalleuchte im Helm des Fahrers und/oder Beifahrers integriert sein, wobei die Energieversorgung entweder durch einen integrierten aufladbaren Akku oder Kondensator oder, insbesondere sofern kein eigener Drucksensor im Helm integriert ist und die Auslösung der blinkenden Signalleuchte durch eine Einwirkung am Fahrzeug erfolgt, diese durch drahtlose Übertragung wird.
Vorteilhafterweise wird bei Verwendung eines aufladbaren Akkus die Stromversorgung durch Solarenergie bewirkt.
Eine weitere Möglichkeit der Energieversorgung besteht darin, dass der Akku bzw. Kondensator bei Fahrbetrieb über eine Verbindung zum einspurigen Kraftfahrzeug aufgeladen wurde und die Auslösung der Signalleuchten im Helm bei Trennung von der Energieversorgung des einspurigen Fahrzeugs blinkend aktiviert werden.
Gegebenfalls kann die Energieversorgung auch über einen Notakku im Motorrad erfolgen.

Ein weiterer Gegenstand der Erfindung ist ein kombiniertes Sicherheits- und Entwarnsystem, wobei zusätzlich zum beschriebenen Sicherheitssystem ein Würfel aus Kunststoff, der mittels eines Magnets oder einen anderen Haltevorrichtung an einer beliebigen einsehbaren Stelle am Fahrzeug befestigt werden kann, vorgesehen ist. Dieser Würfel kann von den Einsatzkräften oder selbst am Fahrzeug befestigt werden um anzuzeigen, dass bereits Hilfe am Unfallort ist oder war und keine weitere Hilfe benötigt wird. Dadurch werden vorbeikommende Personen von ihrer im Gesetz festgelegt Pflicht zur Hilfeleistung entbunden. Der Würfel kann mit reflektierender Farbe ausgeführt sein um eine bessere Sichtbarkeit zu gewährleisten. Der Würfel ist daher zweckmäßigerweise ähnlich wie das Pannendreieck im Fahrzeug mitzuführen. Der Würfel kann zusammenlegbar ausgeführt werden um eine möglichst platzsparende Unterbringung zu ermöglichen.

## Patentansprüche

1. Sicherheitseinrichtung für Kraftfahrzeuge bestehend aus einem oder mehreren in den kritischen Fahrzeugteilen angebrachten Drucksensor(en) und/oder Neigungsschalter(n) (1), der/die bei Überschreiten einer definierten Krafteinwirkung bzw. Neigung des Kraftfahrzeuges über einen Prüf- bzw. Notschalter (2) und ein Relais (3) eine oder mehrere LED - Signalleuchte(n) (4) in Betrieb setzt (setzen), und/oder über einen Lautsprecher (4a) einen Signalton abgeben, wobei die Stromversorgung über einen vom Kraftfahrzeug unabhängigen Stromkreis erfolgt, der seine Energie über einen entsprechend dimensionierten Kondensator oder Akku 6 erhält, der bei Betrieb des Kraftfahrzeugs aufgeladen wird und jeder Stromkreis durch eine Hauptsicherung und eine Nebensicherung abgesichert ist.

2. Sicherheitseinrichtung gemäß Anspruch 1, **dadurch gekennzeichnet, dass** der (die) Drucksensor(en) und/oder Neigungsschalter in der (den) Stoßstangen und/oder den Kotflügeln und/ oder den Türen und/oder dem Dach des Fahrzeugs angebracht ist.

3. Sicherheitseinrichtung nach einem der Ansprüche 1 oder 2, **dadurch gekennzeichnet, dass** das Relais ein Blinkrelais ist.

4. Sicherheitseinrichtung nach einem der Ansprüche 1 bis 3, **dadurch gekennzeichnet, dass** die Sicherheitseinrichtung durch einen Prüfschalter händisch überprüft bzw. in Betrieb oder außer Betrieb gesetzt werden kann.

5. Sicherheitseinrichtung nach einem der Ansprüche 1 bis 4, **dadurch gekennzeichnet, dass** bei einspurigen Fahrzeugen ein Drucksensor und/oder ein Neigungsschalter und/oder eine oder mehrere Signalleuchten im Helm des Fahrers integriert sind.

6. Sicherheitseinrichtung nach Anspruch 5, **dadurch gekennzeichnet, dass** die Aktivierung der Signalleuchten im Helm des Fahrers oder Beifahrers bei einspurigen Kraftfahrzeugen durch drahtlose Übertragung erfolgt.

7. Sicherheitseinrichtung nach Anspruch 5, **dadurch gekennzeichnet, dass** die Aktivierung bei Trennung der Verbindung zwischen Helm und Kraftfahrzeug erfolgt.

8. Sicherheitseinrichtung nach einem der Ansprüche 5 bis 7, **dadurch gekennzeichnet, dass** die Energieversorgung der Signalleuchte(n) im Helm durch Solarenergie erfolgt.

9. Sicherheitseinrichtungen nach einem der Ansprüche 1 bis 8, **dadurch gekennzeichnet, dass** die Sicherheitseinrichtung einen Anschluss zum Betrieb von weiteren Noteinrichtungen aufweist.

10. Sicherheitseinrichtung nach einem der Ansprüche 1 bis 9, **dadurch gekennzeichnet, dass** zusätzlich ein mittels Magnet oder einer anderen Haltevorrichtung am Fahrzeug befestigbarer Würfel zur Entwarnung vorgesehen ist.

11. Sicherheitsvorrichtung nach einem der Ansprüche 1 bis 10, **dadurch gekennzeichnet, dass** zusätzlich ein verdeckter Schalter angeordnet ist, der im Falle eines Überfalls betätigt werden kann und ein Mikrofon und eine LED Signalleuchte aktiviert, wobei das Mikrophon alle Vorgänge im Kraftfahrzeug an eine Notrufzentrale überträgt und die entsprechende LED-Signalleuchte in das Beleuchtungssystem des KFZ integriert ist.
